# EUROPEAN PATENT APPLICATION

(11) **EP 0 666 568 A2**
(43) Date of publication of application: **09.08.1995**
(21) Application number: 95300594.9
(22) Date of filing: 31.01.1995
(51) Int. Cl.: G11B 33/02, G11B 33/12

(54) **Disk drive unit**

(30) Priority: 08.02.1994 JP 14446/94
(71) Applicant: Mitsumi Electric Company Ltd., Chofu-shi Tokyo (JP)
(72) Inventor: Konno, Makoto, c/o Newtronics Co., Ltd., Tendou-shi, Yamagata (JP); Komatsu, Hisateru, c/o Newtronics Co., Ltd., Tendou-shi, Yamagata (JP); Watanabe, Takashi, c/o Newtronics Co., Ltd., Tendou-shi, Yamagata (JP)
(74) Representative: Moir, Michael Christopher

(57) **Abstract**

In a disk driving unit for driving a storage medium of a disk type, a fixing portion is formed integral with a pressed frame made by applying a press working to a plate member. The fixing portion is for fixing the pressed frame to an object. It is preferable that the fixing portion is placed at each of side portions of the press frame. At one of the side portions of the pressed frame, the fixing portion may be made by folding a part of the plate member. At another of the side portions of the pressed frame, the fixing portion may extend to have a first end combined with the pressed frame, a second end for being fixed to the object, and an intermediate portion between the first and the second ends. In this structure, the second end is movable relative to the pressed frame with bending of the intermediate portion.

## Description

### Background of the Invention:

This invention relates to a disk driving unit for driving a storage medium of a disk type, such as a flexible disk and the like.

Recently, a storage medium of a disk type has been widely used as an external memory in various electronic apparatus. For driving or accessing the storage medium, a disk driving unit is provided to the electronic apparatus or other fixed structure.

Such a disk driving unit is generally called a disk driver or a disk drive and is disclosed, as an example, in Japanese Patent Laid Open No. 225966/1988 by Kazuyoshi Fujimori. The disk driving unit comprises a frame and an accessing device mounted on the frame. In the manner known in the art, the accessing device is for accessing to the storage medium and comprises a carriage assembly including a magnetic head, a head driving unit for driving the carriage assembly, a rotating unit for rotating the storage medium, and a circuit board with circuit elements which are for carrying out various operations.

Recently, the frame is often formed by applying a press working to a plate member in the manner as known in the art. Such a frame will be called hereinunder a pressed frame. A fixing portion is used for assembling or fixing the disk driving unit to the structure such as the electronic apparatus and the like.

In the conventional disk driving unit, the fixing portion is made as an independent member which is separated from the pressed frame. Before assembling the disk driving unit to the structure,the fixing portion is fixedly attached to each of side portions of the pressed frame with a screw member.

It is not desirable to make the fixing portion as an independent member that is separated from the press frame. This is because the independent member increases a number of parts of the disk driving unit. In addition, it is necessary to carry out a complicated operation in order to attach the fixing portion to the pressed frame. This results in loss of efficiency of an assembling operation.

It is assumed that the pressed frame is deformed due to distortion caused upon fixing the disk driving unit to the structure. This is because the fixing portion is rigid and fixedly attached to the side portions of the press frame. In addition, such deformation of the pressed frame causes misalignment between the disk driving unit and the structure to which it is attached.

### Summary of the Invention

It is therefore an object of the preferred embodiments of the present invention to provide a disk driving unit comprising a fixing portion which is formed integral with a pressed frame of a disk driving unit for fixing the disk driving unit to electronic apparatus or other structure.

It is another object of the preferred embodiments of the invention to provide a disk driving unit of the type described, in which the fixing portion is adapted to absorb distortion caused upon fixing the disk driving unit to the structure, thereby preventing deformation of the pressed frame.

Other objects will become clear as the description proceeds.

According to the present invention, there is provided a disk driving unit for driving a storage medium of a disk type, said disk driving unit comprising:
a pressed frame formed of pressed plate material;
accessing means mounted on said pressed frame for accessing said storage medium; and
a primary fixing portion for fixing said pressed frame to other structure, said primary fixing portion being formed integral with said pressed frame.

### Brief Description of the Drawings

Fig. 1 is a perspective view of a disk driving unit according to an embodiment of the present invention;
Fig. 2 is a bottom plan view of a press frame forming a part of the disk driving unit illustrated in Fig. 1;
Fig. 3 is a left side view of the press frame illustrated in Fig. 2;
Fig. 4 is a right side view of the press frame illustrated in Fig. 2; and
Fig. 5 is an exploded sectional view of essentials taken along a line V-V of Fig. 2.

### Description of the Preferred Embodiment:

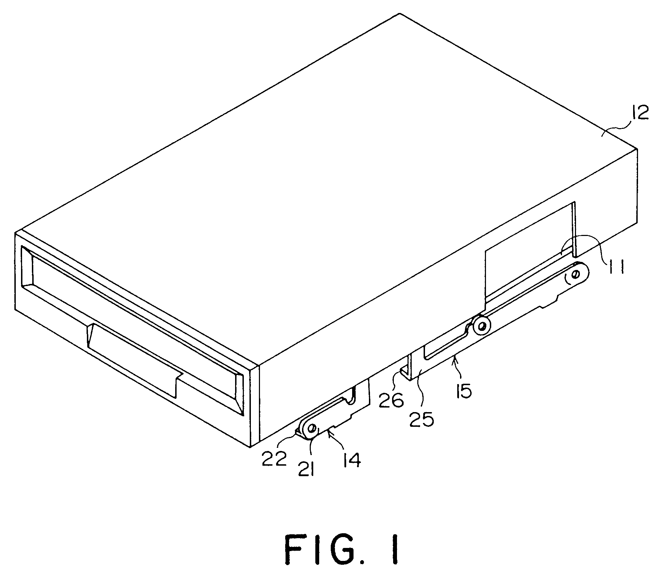

Referring to Fig. 1, description will be made as regards a disk driving unit according to an embodiment of the present invention. The disk driving unit is for use in driving a storage medium of a disk type, such as a flexible disk known in the art. The storage medium is for magnetically memorizing information, such as data and programs. The disk driving unit comprises a pressed frame 11 and a cover 12 which covers the pressed frame 11. The pressed frame 11 is formed by pressing a metal plate in the manner known in the art.

An accessing device (not shown) is provided between the pressed frame 11 and the cover 12 and is for accessing to the storage medium. In the manner known in the art, the accessing device comprises a disk holding unit for holding the storage medium, an ejecting plate for ejecting the storage medium, and a carriage assembly including a magnetic head, a head driving unit for driving the carriage assembly, a rotating unit for rotating the storage medium, and a circuit board mounting circuit elements.

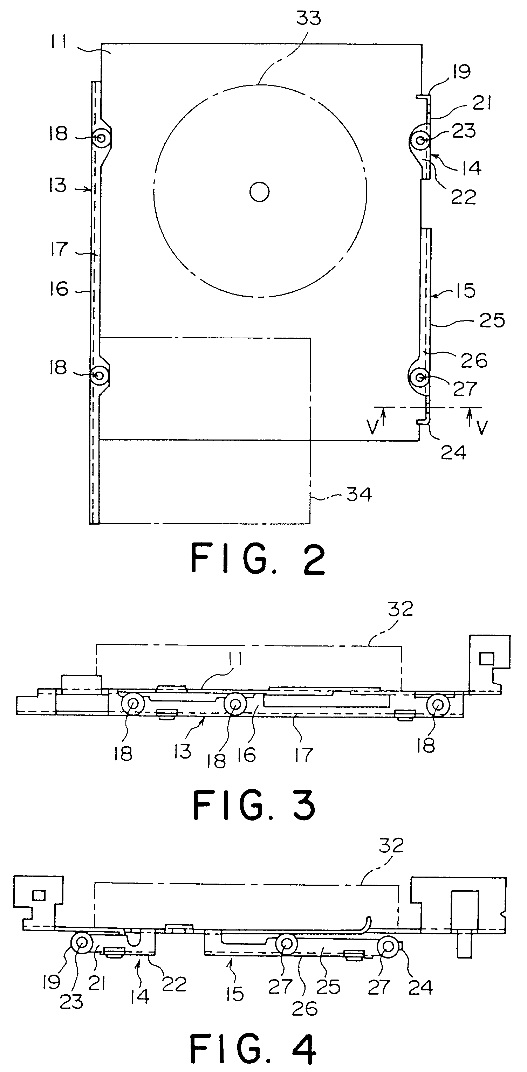

Referring to Figs. 2, 3, and 4 in addition to Fig. 1, the description will be proceeded. The disk driving unit further comprises first, second, and third fixing portions 13, 14, and 15 which are formed integral with the pressed frame 11. Each of the first, the second, the third fixing members 13, 14, and 15 is bent from the pressed frame 11 towards a bottom side thereof. As a result, the pressed frame 11 is opened at an upper portion thereof. In this connection, the upper portion of the pressed frame 11 is covered by another member, such as the above-mentioned disk holding unit.

The pressed frame 11 has a right or primary and a left or secondary side portion which extend in a first direction and are opposite to each other in a second direction perpendicular to the first direction. The first fixing portion 13 is formed by folding a part of the above-mentioned metal plate and is therefore integral with the left side portion of the pressed frame 11. The first fixing portion 13 extends along the left side portion of the pressed frame 11 and has an L-shape in transversal cross section. More specifically, the first fixing portion 13 comprises a side portion 16 folded downward from the pressed frame 11 and a lower portion 17 folded inside at a lower end of the side portion 16. The side and lower portions 16 and 17 have three and two, respectively, tapped holes 18 formed therein to receive screw members.

The second fixing portion 14 is formed at a front portion of the right side portion of the pressed frame 11 and extends frontwardly along the right side portion of the pressed frame 11. The second fixing portion 14 comprises a first end combined with the pressed frame 11, a second or free end for being fixed to the object, and an intermediate portion between the first and the second ends. As a result, the second end is movable relative to the pressed frame 11 with bending of the intermediate portion of the second fixing portion 14.

The second fixing member 14 further comprises a side portion 21 and a lower portion 22 folded inside at a bottom end of the side portion 21. Each of the side and the lower portions 21 and 22 has a tapped hole 23 formed therein to receive a screw member.

The third fixing portion 15 is formed at a rear portion of the right side portion of the pressed frame 11 and extends rearwardly along the right side portion of the pressed frame 11. The third fixing portion 15 comprises a first end combined with the pressed frame 11, a second or free end for being fixed to the object, and an intermediate portion between the first and the second ends. As a result, the second end of the third fixing portion 15 is movable relative to the pressed frame 11 with bending of the intermediate portion of the third fixing portion 15.

The third fixing portion 15 further comprises a side portion 25 and a lower portion 26 folded inside at a bottom end of the side portion 25. The side and the lower portions 25 and 26 have a plurality of tapped holes 27 formed therein to receive screw members.

Each of the second and the third fixing portions 14 and 15 will be referred to as a primary fixing portion. The first fixing portion 13 will be referred to as a secondary fixing portion.

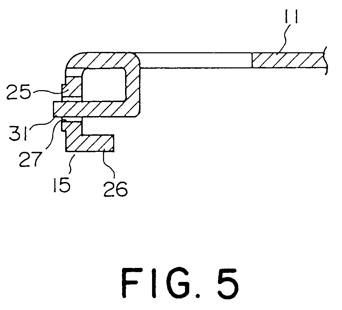

Referring to Fig. 5 in addition, the pressed frame 11 comprises an engagement piece 31 formed by bending a part of the pressed frame 11 downward. The engagement piece 31 is inserted with a gap at a periphery thereof into one of the tapped holes 27 that is made in the side portion of the third fixing portion 15. As a result, the second end of the third fixing portion 15 has a movable range limited by the engagement piece 31. In other words, the engagement piece 31 is for restricting movement of the second end of the third fixing portion 15 and will be referred to as a restricting arrangement.

On the other hand, it is unnecessary to restrict movement of the second end of the second fixing portion 14. This is because the second fixing portion 14 is shorter than the third fixing portion 15 in the first direction.

Returning to Figs. 2 to 4, the description will be proceeded. The pressed frame 11 has an upper or first and a bottom or second principal surface which are opposite to each other in a third direction perpendicular to the first and the second directions. In the manner which will presently be described, the accessing device comprises a main portion 32, a rotor 33, and a circuit board 34. The main portion 32 is placed on the first principal surface of the pressed frame 11. The rotor 33 is for rotating the storage medium. The circuit board 34 mounts circuit elements which is for carrying out various operations in response to electric signals. Each of the rotor 33 and the circuit board 34 is placed on the second principal surface of the pressed frame 11 and will be referred to as a supplementary portion.

Each of the first, the second, and the third fixing portions 13, 14, and 15 is projected from the pressed frame 11 in the third direction to face the supplementary portion in the second direction. In this connection, the pressed frame 11 has an open portion facing the main portion 32 in the second direction. The open portion is for enabling the main portion 32 be operated therethrough.

The disk driving unit comprising the pressed frame 11 is attached to a frame of the electric apparatus by means of screwing the fixtures such as screw members into the tapped holes 18, 23, and 27. Inasmuch as the first, the second, and the third fixing portions 13, 14, and 15 are formed integral with the pressed frame 11, it is unnecessary to prepare as independent members from the pressed frame 11. Accordingly, a particular operation is not required for assembling such independent members.

Furthermore, the first fixing portion 13 is made by folding a part of the metal plate while the second and the third fixing portions 14 and 15 are cantilevered to the press frame 11. With this structure, the disk driving unit is held tightly to the electronic apparatus. The second and the third fixing portions 14 and 15 absorb any distortion, shock, and vibration caused during the service of the disk driving unit with being attached to the electronic apparatus. The movement of the third fixing portions 15 is restricted, so that the third fixing portion 15 is not deformed unnecessarily even when the electronic apparatus is subjected to shock and vibration.

While this invention has thus far been described in conjunction with a preferred embodiment thereof, it will readily be possible for those skilled in the art to put this invention into practice in various other manners. For example, restriction of the movement may be carried out as regards the second fixing portion as well as the third fixing portion.

Each feature disclosed in the specification (which term includes the claims) and/or shown in the drawings may be incorporated in the invention independently of other disclosed and/or illustrated features.

The appended abstract as filed herewith is included in the specification by reference.

## Claims

1. A disk driving unit for driving a storage medium of a disk type, said disk driving unit comprising:
a pressed frame formed of pressed plate material;
accessing means mounted on said pressed frame for accessing said storage medium; and
a primary fixing portion for fixing said pressed frame to other structure, said primary fixing portion being formed integral with said pressed frame.

2. A disk driving unit as claimed in Claim 1, wherein said primary fixing portion extends in a first direction to have a first end combined with said pressed frame, a second end for fixing to said structure, and an intermediate portion between said first and said second ends, said second end being movable relative to said pressed frame with bending of said intermediate portion.

3. A disk driving unit as claimed in Claim 2, further comprising restricting means connected to said pressed frame for restricting movement of said second end of the primary fixing portion.

4. A disk driving unit as claimed in Claim 2, wherein said pressed frame comprises a primary and a secondary side portion which are opposite to each other in a second direction perpendicular to said first direction, said primary fixing portion being formed integral with said primary side portion, said disk driving unit further comprising a secondary fixing portion formed integral with said secondary side portion for fixing said pressed frame to said fixed structure in cooperation with said primary fixing portion.

5. A disk driving unit as claimed in Claim 4, wherein said secondary fixing portion is formed by folding a part of said plate member.

6. A disk driving unit as claimed in Claim 4, wherein said pressed frame has a first and a second principal surface which are opposite to each other in a third direction perpendicular to said first and said second directions, said accessing means comprising a main portion placed on said first principal surface and a supplementary portion placed on said second principal surface, each of said primary and said secondary fixing portions being projected from said pressed frame in said third direction to face said supplementary portion in said second direction.

7. A disk driving unit as claimed in Claim 6, wherein said pressed frame has an open portion facing said main portion of the accessing means in said second direction, said open portion being for enabling said main portion be operated therethrough.
